# EUROPÄISCHE PATENTSCHRIFT

(11) **EP 2 616 696 B1**
(45) Veröffentlichungstag und Bekanntmachung des Hinweises auf die Patenterteilung: **04.03.2015**
(21) Anmeldenummer: 11745541.0
(22) Anmeldetag: 16.08.2011
(51) Int. Cl.: F16C 19/38, F16C 25/06, F16C 35/063, B25B 27/06, F16B 1/00, F16B 31/04, F16C 35/078, B25B 5/06, F16B 2/06

(54) **HYDROMECHANISCHE SPANNVORRICHTUNG**
HYDROMECHANIC TENSIONING DEVICE
TENDEUR HYDROMÉCANIQUE

(30) Priorität: 15.09.2010 DE 102010040784
(43) Veröffentlichungstag der Anmeldung: 24.07.2013
(73) Patentinhaber: Aktiebolaget SKF, 41 550 Göteborg (SE)
(72) Erfinder: SEUBERLING, Mathias, 97633 Großeibstedt (DE)
(74) Vertreter: Schonecke, Mitja
(86) Internationale Anmeldenummer: PCT/EP2011/064055
(87) Internationale Veröffentlichungsnummer: WO 2012/034801

(56) Entgegenhaltungen:
- DE-A1- 2 915 088
- JP-A- 2008 281 084
- US-A- 2 972 504
- US-A- 3 462 180
- US-A- 4 008 598

## Beschreibung

Die Erfindung betrifft eine Spannvorrichtung, die einen Grundkörper mit einer Druckkammer aufweist.

Die DE 29 15 088 Al beschreibt ein Lagerelement mit einem zylindrischen Teil und mit einem diesen umgebenden ringförmigen Teil, auf den dauernd ein hydraulisches Druckmittel einwirkt, wobei an dem ringförmigen Teil ein Druckorgan anliegt, das einen Hohlraum aufweist, der mit dem hydraulischen Druckmittel beaufschlagt ist. Das Druckorgan ist ein Stahlring, dessen Hohlraum einen rechteckigen Querschnitt aufweist.

Die JP 2008-281084 A zeigt eine Spannvorrichtung, die eine Druckkammer mit einem eingeschlossenen Fluid aufweist, wobei an der Vorderseite der Spannvorrichtung eine Membran angeordnet ist und rückseitig ein magnetorestriktiver und insoweit verformbarer Stößel, der eine Stirnwand aufweist, in die Druckkammer eintaucht.

Aufgabe der Erfindung ist es, eine alternative Spannvorrichtung zu schaffen.

Die Aufgabe der Erfindung wird gelöst durch eine Spannvorrichtung aufweisend einen Grundkörper, der wenigstens eine Druckkammer mit jeweils wenigstens einer in Wirkungsrichtung weisenden Öffnung aufweist und eine die wenigstens eine Öffnung verschließende erste Membran, die mit dem Grundkörper druckdicht verbunden ist, wobei in der Druckkammer eine konstante Menge an Druckfluid eingeschlossen ist, die erste Membran einen ersten Seitenwandabschnitt der Druckkammer bildet, die Spannvorrichtung eine Vorrichtung zum Bewegen eines zweiten Seitenwandabschnitts der Druckkammer an der Spannvorrichtung aufweist und der zweite Seitenwandabschnitt als eine zweite Membran ausgebildet ist.

Die Spannvorrichtung kann dazu dienen, wenigstens ein Maschinenelement, insbesondere ein Wälzlager bzw. wenigstens einen seiner beiden Lagerringe axial auf einer Welle oder in einer Lagerbohrung durch Drücken gegen einen Sitz oder gegen ein weiteres Maschinenelement festzusetzen oder zusätzlich zu einer anderen Art des Festsetzens, wie bspw. eines Presssitzes zu sichern. Die Spannvorrichtung kann auch dazu dienen, zwischen zwei gegenüberliegend angeordneten Maschinenelementen, insbesondere Wälzlagern, wie beispielsweise zwei anzustellenden Kegelrollenlagern, eingesetzt zu werden, um diese beiden Bauteile zu verspannen. Durch die Spannvorrichtung können auch mehrere Maschinenelemente, insbesondere mehrere Wälzlager bzw. wenigstens jeweils einer ihrer Lagerringe gemeinsam auf einer Welle oder einer Lagerbohrung festgesetzt und/oder gesichert werden.

Die Spannvorrichtung kann nach dem Grundprinzip eines fluidbeaufschlagten Arbeitszylinders funktionieren, wobei der erfindungsgemäße Grundkörper das Gehäuse mit einer Druckkammer bildet, in welcher ein Druckfluid eingesperrt ist, und wobei die erfindungsgemäße Membran dem Kolben entspricht, welcher aufgrund des Fluiddruckes in der vom Grundkörper ausgebildeten Druckkammer eine Bewegung ausführt. Dabei bedeutet Wirkungsrichtung im Sinne der Erfindung diejenige Richtung, in welche die Membran eine Bewegung ausführen kann, um eine Kraft auf das zu verspannende Maschinenelement bzw. Wälzlager oder Wälzlagerring zu übertragen. In einer Variante kann die erfindungsgemäße Membran durch eine Stirnseite eines Gewindeabschnitts einer oder mehrerer Schrauben gebildet werden, die in die Druckkammer eindringen.

Die Membran kann unterschiedlich gestaltet sein, je nach Gestalt des Grundkörpers. Als Membran kann im Sinne der Erfindung jedes dünnwandige Bauteil verstanden werden, das hinsichtlich des verwendeten Druckfluids druckdicht ist und eine Elastizität aufweist, die trotz einer, die erfindungsgemäße Öffnung verschließende, druckdichten Verbindung mit dem Grundkörper eine Bewegung der Membran zulässt. Diese Elastizität kann durch die Wahl der Wandstärken, durch die Ausgestaltung von Abschnitten der Membran, durch die Materialeigenschaften der Membran oder durch eine Kombination von wenigstens zweien dieser Merkmale erreicht werden. Die Membran kann aus dem selben Werkstoff wie der Grundkörper hergestellt sein, und sie kann an ihren Bauteilrändern druckdicht an dem Grundkörper befestigt sein, und die Bewegung zur Übertragung der Spannkraft kann durch ein elastisches Ausbeulen einer mittleren Zone der Membran bewirkt werden. Der Grundkörper kann aus Stahl hergestellt sein, insbesondere kann er aus einem Werkstoff hergestellt sein, wie er beispielsweise bei bekannten Lagerringen von Wälzlagern verwendet wird. Die Membran kann aus einem Blech hergestellt sein.

Indem erfindungsgemäß eine Membran mit dem die Druckkammer aufweisenden Grundkörper druckdicht verbunden wird, ist die Funktion der Spannvorrichtung verbessert. So kann beispielsweise die Membran aus einem anderen Material als der Grundkörper hergestellt sein. Die Membran kann zur Bewirkung der benötigten elastischen Eigenschaften eine geringere Härte als der Grundkörper aufweisen. Alternativ kann die Membran eine größere Härte als der Grundkörper aufweisen und zur Bewirkung der benötigten elastischen Eigenschaften sehr dünn ausgebildet sein. Auch können aufgrund der Verwendung wenigstens einer erfindungsgemäßen Membran statt einer Gesamtfläche auch nur ausgewählte Zonen sich elastisch bewegend ausgebildet werden, um eine Spannkraft zu übertragen. Über die funktionale Verbesserung hinaus, kann der Grundkörper einfacher und damit kostengünstiger hergestellt werden, da keine hinterschnittenen Hohlkammern gefertigt werden müssen, sondern die Druckkammer im Grundkörper einseitig offen ausgebildet werden kann und diese Öffnung von der erfmdungsgemäßen metallischen Membran anschließend verschlossen wird, um eine druckdichte Druckkammer zu bilden.

Bei der erfindungsgemäßen Spannvorrichtung kann durch individuelles Einstellen des zweiten Seitenwandabschnitts der Druckkammer der Druck in der Druckkammer verändert werden. Dies ist möglich, weil in der Druckkammer eine konstante Menge an Druckfluid eingeschlossen ist.

Durch Bewegen des zweiten Seitenwandabschnitts und aufgrund der konstanten Menge an Druckfluid beult sich der erste Seitenwandabschnitt bzw. die Membran nach außen. Mittels der sich ausbeulenden Membran kann ein Maschinenelement wie ein Wälzlager definiert mechanisch vorgespannt werden. Die erfindungsgemäße Spannvorrichtung kann kontrolliert, d.h. dessen Funktion überwacht und gegebenenfalls auch nachgestellt werden. Die Spannvorrichtung kann mehrmals wieder verwendet werden. Die Spannvorrichtung kann universell, d.h. sehr vielseitig, eingesetzt werden; insbesondere kann sie bei unterschiedlichsten Maschinenelementen bzw. Wälzlagern ohne aufwändige konstruktive Anpassungen der Spannvorrichtung verwendet werden.

Die Vorrichtung zum Bewegen des zweiten Seitenwandabschnitts kann eine mechanische Stelleinrichtung aufweisen. Die mechanische Stelleinrichtung kann entweder unmittelbar in die Druckkammer eindringen oder den zweiten Seitenwandabschnitt bewegen oder mittelbar auf den zweiten Seitenwandabschnitt der Druckkammer einwirken. In einer Ausgestaltung, in der die mechanische Stelleinrichtung unmittelbar auf die Druckkammer einwirkt, kann die mechanische Stelleinrichtung bzw. ein mechanischer Teil der Stelleinrichtung in die Druckkammer eindringen. Die mechanische Stelleinrichtung kann dazu beispielsweise einen in die Druckkammer eindringenden Stößel bzw. Stößelabschnitt aufweisen.

In einer Ausgestaltung, in der die mechanische Stelleinrichtung mittelbar auf Seitenwände der Druckkammer einwirkt, kann die mechanische Stelleinrichtung wenigstens eine Seitenwand bewegen. Alternativ kann die mechanische Stelleinrichtung wenigstens eine Seitenwand verformen. Folglich kann die mechanische Stelleinrichtung ausgebildet sein, einen zweiten Seitenwandabschnitt der Druckkammer zu bewegen und/oder zu verformen.

Alternativ kann die Seitenwand bzw. der zweite Seitenwandabschnitt der Druckkammer durch einen Stößel bzw. Stößelabschnitt bewegt bzw. verformt werden.

In einer Ausführungsform kann die mechanische Stelleinrichtung eine Stellschraube zum Betätigen des Stößelabschnitts aufweisen. Beispielsweise kann der Stößelabschnitt von einem Gewindeabschnitt einer Stellschraube gebildet werden.

In allen erfindungsgemäßen Ausgestaltungen kann der zweite Seitenwandabschnitt, die Druckkammer begrenzend, gegenüberliegend der Membran bzw. gegenüberliegend dem ersten Seitenwandabschnitt angeordnet sein. Der zweite Seitenwandabschnitt kann insbesondere parallel zur Membran bzw. dem ersten Seitenwandabschnitt verlaufend angeordnet sein.

In einem Ausführungsbeispiel ist wenigstens eine Stellschraube mittels eines Außengewindeabschnitts in einer Innengewindebohrung des Grundkörpers axial verstellbar gehalten. Die Stellschraube kann beispielsweise an einem Schraubenkopf betätigt, d.h. gedreht, werden. Ein dem Schraubenkopf gegenüberliegendes Stirnende der Schraube drückt in axialer Richtung auf einen Seitenwandabschnitt der Druckkammer. Dieser zweite Seitenwandabschnitt kann durch den Vorschub der Schraube mittels des Stirnendes gebogen bzw. aufgewölbt werden. Dadurch wölbt sich wiederum die Membran, d.h. der erste Seitenwandabschnitt der Spannvorrichtung nach außen auf. Sowohl die Membran bzw. der erste Seitenwandabschnitt und der zweite Seitenwandabschnitt, der durch die Schraube betätigt, d.h. verformt wird, können mit dem Grundkörper verschweißt sein, um eine druckfluiddichte Druckkammer zu bilden.

In der Druckkammer der erfindungsgemäßen Spannvorrichtung ist eine konstante Menge an Druckfluid eingeschlossen. In allen erfindungsgemäßen Ausgestaltungen kann zur Befüllung einer leeren Druckkammer die Spannvorrichtung mit einer Einfüllöffnung versehen sein. Die Einfüllöffnung für Druckfluid kann an einer Umfangsseite des Grundkörpers angeordnet sein. Die Einfüllöffnung kann in allen Ausgestaltungen von einem Stopfen verschlossen sein. So bleibt eine konstante Menge an Druckfluid in der Druckkammer der Spannvorrichtung eingeschlossen. In allen erfindungsgemäßen Ausgestaltungen kann der Grundkörper ein metallischer Grundkörper sein.

In allen erfindungsgemäßen Ausgestaltungen kann die Membran bzw. der erste Seitenwandabschnitt und/oder der zweite Seitenwandabschnitt mit dem Grundkörper druckdicht verbunden, insbesondere verschweißt oder verklebt sein.

Der Grundkörper kann als ein im Wesentlichen ringförmiger Körper bzw. als Ring ausgebildet sein, der zur Bildung der wenigstens einen Druckkammer an seiner in Wirkungsrichtung weisenden Stirnfläche mit einer wenigstens teilweise um den Körper umlaufenden Nut versehen ist, die von einer im Wesentlichen ringscheibenförmigen und an die umlaufende Erstreckung der Nut angepasste Membran verschlossen ist. Die Dicke der Membran und die Tiefe der Nut können so bemessen sein, dass die äußere Seite der Membran mit der Stirnseite des Grundkörpers bündig abschließt. In einer Nut zur Bildung eines Aufnahmeplatzes für die Membran kann im Nutgrund einer ersten Nut eine zweite Nut vorgesehen sein, welche die Größe der Druckkammer definiert. Das bedeutet, dass die Nut gestuft ausgebildet sein kann, so dass sie einen Absatz aufweist, auf dem die Membran in ihrer Einbaulage aufsitzt.

Alternativ kann der Grundkörper auf seiner in Wirkungsrichtung weisenden Stirnseite eine schmale Nut aufweisen, die einen geschlossenen Zug bildet, welcher die Form der äußeren Begrenzung der Membran entspricht. In diese Nut kann ein sich entgegen der Wirkungsrichtung erstreckender Rand der Membran eingreifen.

In allen erfindungsgemäßen Ausgestaltungen kann der Grundkörper zur Bildung einer Spannmutter mit einem Gewinde, insbesondere mit einem außenumfangsseitig des Grundkörpers angeordneten Außengewinde und/oder mit einem innenumfangsseitig des Grundkörpers angeordneten Innengewinde versehen sein. Eine als Spannmutter ausgebildete erfindungsgemäße Spannvorrichtung kann zur Verspannung von Wälzlagern verwendet werden. Mittels einer Spannmutter mit Gewinde kann ein einzelner Lagering eines Wälzlagers oder mehrere Lageringe mehrerer Wälzlager gegen einen Lagersitz oder gegen ein weiteres Wälzlager verspannt werden.

Der Grundkörper kann ein metallischer Grundkörper sein. Alternativ oder ergänzend kann die Membran bzw. der erste Seitenwandabschnitt und/oder der zweite Seitenwandabschnitt eine metallische Membran sein. Die Membran bzw. der erste Seitenwandabschnitt und/oder der zweite Seitenwandabschnitt kann als Verbundbauteil, insbesondere als metallische Komponenten aufweisendes Verbundbauteil hergestellt sein.

Eine beispielsweise metallische Membran bzw. der erste Seitenwandabschnitt und/oder der zweite Seitenwandabschnitt kann mit dem Grundkörper druckdicht verbunden, insbesondere verschweißt oder verklebt sein. Die insbesondere metallische Membran bzw. der erste Seitenwandabschnitt und/oder der zweite Seitenwandabschnitt kann dabei randseitig an dem Grundkörper anliegen. Die insbesondere metallische Membran bzw. der erste Seitenwandabschnitt und/oder der zweite Seitenwandabschnitt kann mit dem Grundkörper einen Stumpfstoß oder Stirnstoß bilden, der mittels einer am Rand der insbesondere metallischen Membran bzw. der erste Seitenwandabschnitt und/oder der zweite Seitenwandabschnitt umlaufenden Schweißnaht, insbesondere I-Naht oder V-Naht vorzugsweise bündig verschweißt ist.

Insbesondere kann die erfindungsgemäße Spannvorrichtung bzw. die erfmdungsgemäße Spannmutter zur Verspannung von Wälzlagern für die Rotor-Abstützung von Windkraftanlagen, insbesondere der Multimegawattklasse dienen. Derartige Großwälzlager können auf Basis eines zweireihigen Kegelrollenlagers, beispielsweise eines Außendurchmessers von 2330 Millimeter verspannt werden. Diese zweireihigen Kegelrollenlager können zusätzlich zu den üblichen Radial- und Axiallasten auch noch Kippmomente aufnehmen. Dadurch ist es möglich, den Rotor mit nur einem einzigen Lager abzustützen.

In allen erfindungsgemäßen Ausgestaltungen können mehrere Vorrichtungen zum Bewegen des zweiten Seitenwandabschnitts der Druckkammer, insbesondere mehrere mechanische Stelleinrichtungen über den Umfang des Grundkörpers verteilt, insbesondere gleichmäßig verteilt angeordnet sein.

Ein Ausführungsbeispiel der Erfindung ist exemplarisch in den beigefügten schematischen Zeichnungen dargestellt. Es zeigen:
- Fig. 1: eine Draufsicht auf eine erfindungsgemäße Spannvorrichtung,
- Fig. 2: einen Querschnitt entlang der Schnittlinie A-A durch die erfindungsgemäße Spannvorrichtung gemäß Fig. 1,
- Fig. 3: einen vergrößerten Teilquerschnitt B aus der Ansicht gemäß Fig. 2, in einer unverspannten Stellung;
- Fig. 4: einen vergrößerten Teilquerschnitt B aus der Ansicht gemäß Fig. 2, in einer verspannten Stellung;
- Fig. 5: einen Teilquerschnitt durch eine Montagebaugruppe aufweisend einen Lagersitz, ein Wälzlager und die erfindungsgemäße Spannvorrichtung gemäß Fig. 1 bis 4 in einer verspannten Einbausituation.

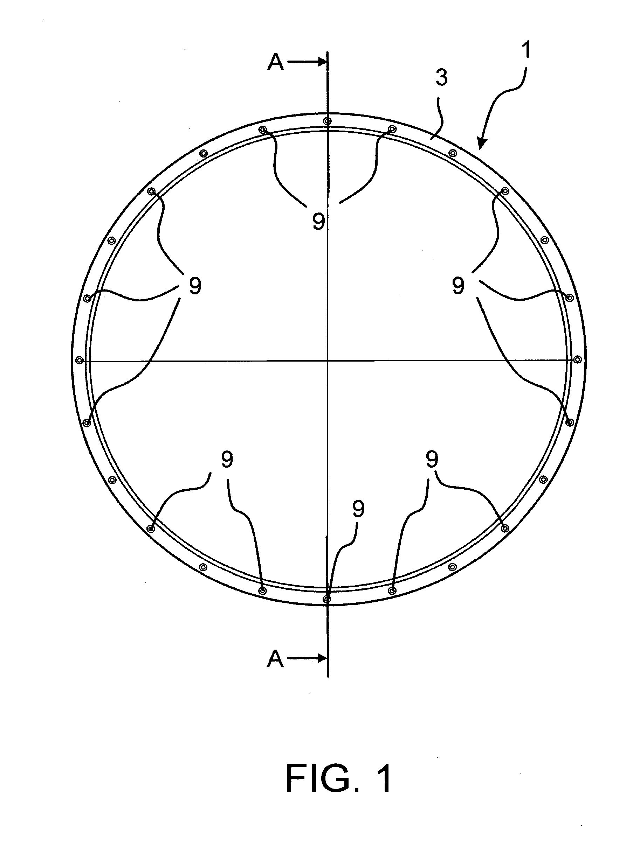

Die in der Fig. 1 dargestellte Spannvorrichtung 1 weist einen kreisringförmigen Grundkörper 3 auf. An einer rückwärtigen Stirnseite 5 des Grundkörpers 3, die in der Fig. 1 sichtbar vorne dargestellt ist, sind mehrere, d.h. im gezeigten Ausführungsbeispiel vierundzwanzig mechanische Stelleinrichtungen 9, gleichmäßig auf einem Kreis verteilt angeordnet.

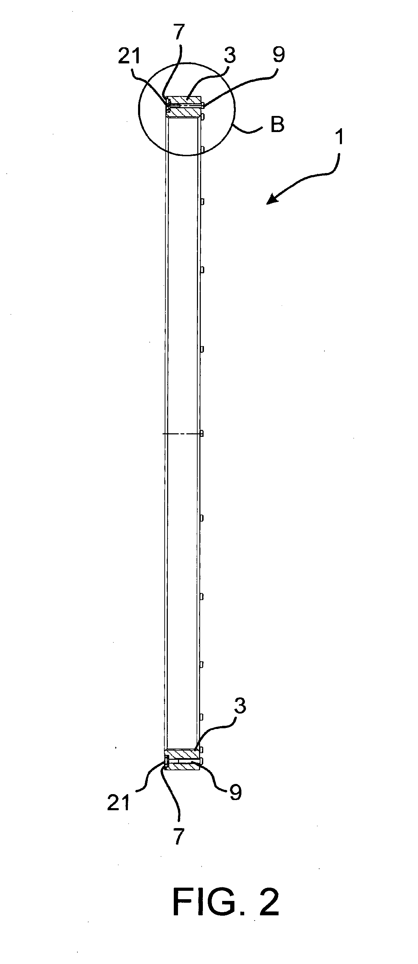

In der Fig. 2 ist die Spannvorrichtung 1 gemäß Fig. 1 in einem Querschnitt entlang der Schnittlinie A-A dargestellt. An einer der rückwärtigen Stirnseite 5 des Grundkörpers 3 gegenüberliegenden frontseitigen Stirnfläche 15 des Grundkörpers 3 weist die Spannvorrichtung 1 eine Membran 21 auf.

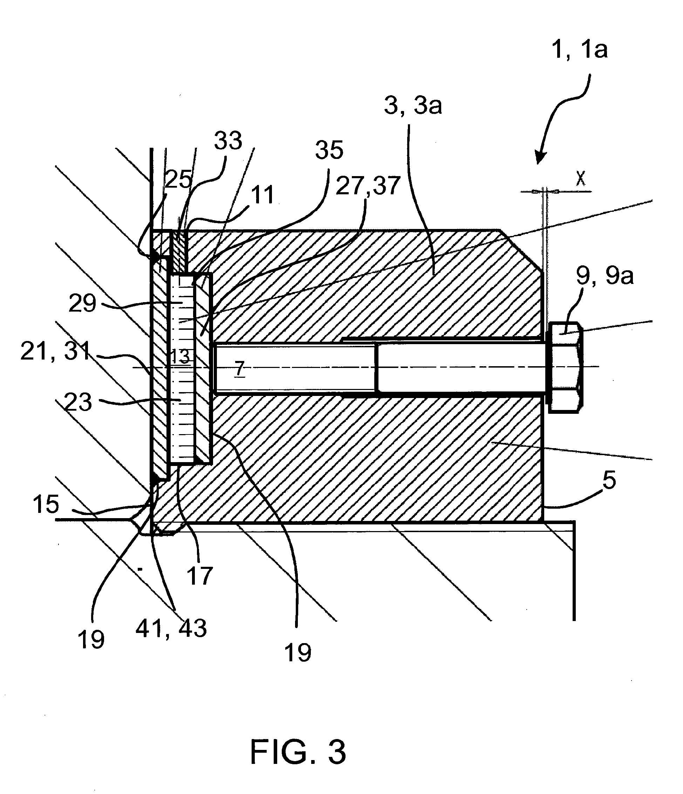

Die Anordnung der Membran 21 an der Spannvorrichtung 1, insbesondere an dem Grundkörper 3, ist in Fig. 3 in einer Detailansicht vergrößert herausgestellt gezeigt. In der Fig. 3 ist eine erfindungsgemäße Spannvorrichtung in einer unverspannten, d.h. beispielsweise drucklosen, Stellung dargestellt.

Der Grundkörper 3 der Spannvorrichtung 1 weist eine Druckkammer 13 auf. Zur Bildung der Druckkammer 13 ist der Grundkörper 3 als ein Ring 3a ausgebildet, der an seiner in Wirkungsrichtung weisenden Stirnfläche 15, also der frontseitigen Stirnfläche 15, mit einer umlaufenden Nut 17 versehen ist. Die Nut 17 weist einen Absatz 19 auf, an dem die insbesondere ringscheibenförmige Membran 21 aufsitzt. Die ringscheibenförmige Membran 21 verschließt die Nut 17 unter Belassung der Druckkammer 13. In Richtung der frontseitigen Stirnfläche 15, also in Wirkungsrichtung, weist die Nut 17 insoweit eine Öffnung 23 auf, die von der Membran 21 unter Bildung der Druckkammer 13 druckdicht verschlossen ist. Die Membran 21 ist mit dem Grundkörper 3 druckdicht verbunden. Vorzugsweise sind der Grundkörper 3 und die Membran 21 aus metallischen Werkstoffen hergestellt, besonders bevorzugt sind sie aus Stahl hergestellt. Die Membran 21 ist im dargestellten Ausführungsbeispiel mit dem Grundkörper 3 druckdicht mittels einer umlaufenden Schweißnaht 25 verschweißt.

Im Bereich eines Nutgrundes 19 ist eine zweite Membran 27 druckdicht mit dem Grundkörper 3 verbunden, beispielsweise mittels einer umlaufenden Schweißnaht 35 verschweißt. Zwischen der Membran 21 bzw. dem ersten Seitenwandabschnitt 31 und der Membran 27 bzw. dem zweiten Seitenwandabschnitt 37 ist ein Druckfluid 29 eingeschlossen. Das Druckfluid 29 kann über eine Einfüllöffnung 11 in die Druckkammer 13 eingefüllt werden. Mittels eines Stopfens 33 kann das Druckfluid 29 dicht in der Druckkammer 13 gehalten werden.

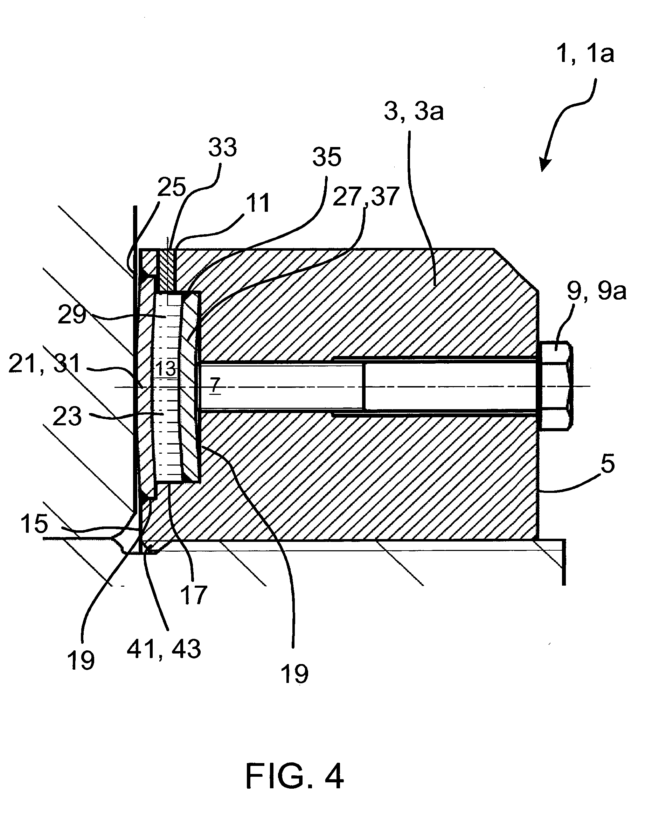

In der Fig. 4 ist die erfindungsgemäße Spannvorrichtung gemäß Fig. 3 in einer das Wälzlager 45 verspannten Stellung dargestellt.

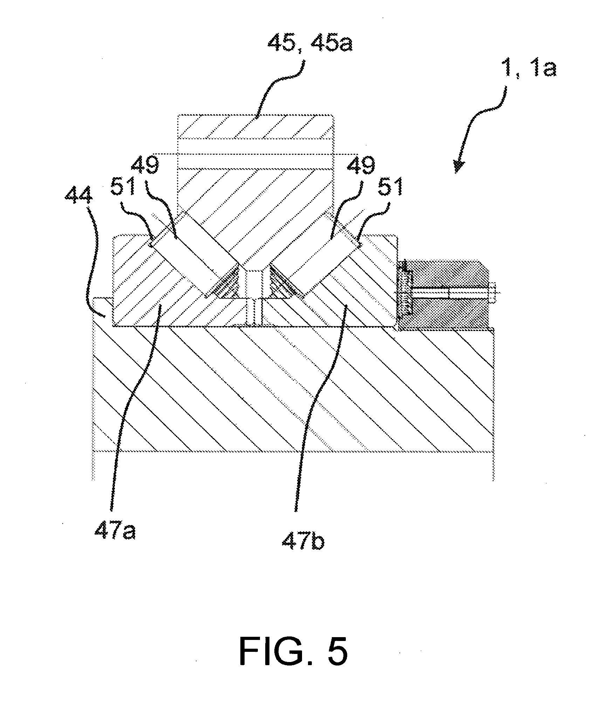

Die mechanische Stelleinrichtung 9 weist die Stellschraube 9a auf. Die gezeigte Stellschraube 9a repräsentiert eine von mehreren mechanischen Stelleinrichtungen 9, die in Fig. 1 gezeigt sind. Die Stellschraube 9a ist mittels eines Gewindeabschnitts, das den Stößelabschnitt 7 bildet, axial verstellbar in dem ringförmigen Grundkörper 3, d.h. in dem Ring 3a, eingeschraubt. Wird die Stellschraube 9a hineingeschraubt, so drückt eine Stirnseite der Stellschraube 9a im Bereich des Stößelabschnitts 7 gegen eine Rückseite der zweiten Membran 27, derart, dass sich die zweite Membran 27 nach innen, d.h. in Richtung der Druckkammer 13, d.h. zum Druckfluid 29 hin, wölbt. Die zweite Membran 27 ist umfangsseitig mittels der Schweißnaht 35 druckdicht mit dem Grundkörper 3, d.h. mit dem Ring 3a, verbunden. Im entspannten Zustand liegt die zweite Membran 27, wie in Fig. 3 gezeigt, flächig bzw. bündig auf dem Nutgrund 19 der Nut 17 auf. Da eine konstante Menge an Druckfluid 29, das beispielsweise Glycerin sein kann, in der Druckkammer 13 eingeschlossen ist, wölbt sich die erste Membran 21 bzw. der erste Seitenwandabschnitt 31 der Druckkammer 13 nach außen und drückt das Wälzlager 45 bzw. im dargestellten Ausführungsbeispiel einen Innenring des Wälzlagers 45 gegen einen Lagersitz 44, wie in Fig. 5 gezeigt. Hinsichtlich der Fertigung einer erfindungsgemäßen Spannvorrichtung 1, insbesondere Lagerspannvorrichtung, kann zunächst die Nut 17 in den Grundkörper 3 eingedreht werden, anschließend zuerst die zweite Membran 27 und dann die erste Membran 21 eingeschweißt werden. Im Anschluss wird über die Einfüllöffnung 11 das Druckfluid 29 in die Druckkammer 13 eingefüllt und die Druckkammer 13 mittels des Stopfens 33 verschlossen. Der Stopfen 33 kann beispielsweise eingeschweißt, eingeklebt oder eingepresst werden.

Der Grundkörper 3 ist in einer in Fig. 5 gezeigten Ausführung zur Bildung einer Spannmutter 1a mit einem Gewinde 43 versehen. Im gezeigten Ausführungsbeispiel ist das Gewinde 43 innenumfangsseitig des Grundkörpers 3 angeordnet und stellt somit ein Innengewinde 41 dar.

Somit kann die Erfindung die Sicherung eines Wälzlagers mittels einer Spannmutter 1a betreffen. Zu diesem Zweck kann ein vorzugsweise einteiliger Grundkörper 3 an seiner, an einem Lagerinnenring anliegenden, Stirnfläche 15 eine umlaufende Druckkammer 13 aufweisen. Die Druckkammer 13 ist im Ausführungsbeispiel durch eine eingeschweißte Membran 21 verschlossen. Nach dem Aufdrehen der Spannmutter 1a bis zur satten Anlage der Membran 21 am Lagerring des Wälzlagers wird der Druck in der Druckkammer 13 dadurch erhöht, dass die Stellschrauben 9a angezogen werden. Die erste Membran 21 wölbt sich vor und verspannt die beiden Innenringe 47a, 47b des Wälzlagers 45 gegen den Lagersitz 44. Die Spannvorrichtung 1 bildet in allen derartigen Ausgestaltungen eine Lagerspannvorrichtung.

Die auf den Grundkörper 3 aufgeschweißte, relativ dünne Stirnwand der Membran 21 beult sich elastisch aus und belastet so das Wälzlager axial mit der erforderlichen axialen Vorspannung.

Die Fig. 5 zeigt einen Teilquerschnitt durch eine Montagebaugruppe aufweisend den Lagersitz 44, ein Wälzlager 45 und die erfindungsgemäße Spannvorrichtung 1 bzw. die Spannmutter 1a. Die Spannmutter 1a spannt die beiden Innenringe 47a, 47b eines beispielhaft dargestellten zweireihigen Kegelrollenlagers 45a gegenseitig in eine vorgespannte Lage und gemeinsam gegen den Lagersitz 44.

Beide Lagerreihen des zweireihigen Kegelrollenlagers 45a weisen im gezeigten Ausführungsbeispiel einen Druckwinkel von 45° auf. Dies verleiht dem Kegelrollenlager 45a eine große Stützweite und damit hohe Steifigkeit. Ein weiterer Vorteil des großen Druckwinkels ist der sich daraus ergebende kleine Kegelwinkel der Rollen 49. Je kleiner der Kegelwinkel, desto geringer wird die Reibung zwischen den Rollen 49 und dem Führungsbord 51. Zusätzlich ist der Führungsbord 51 tribologisch günstig gestaltet, damit sich im Rolle-Bord-Kontakt ein idealer Schmierfilm einstellen kann.

Ausgehend von den Werten, die für solche zweireihigen Kegelrollenlager 45a gegeben sind, würde bei Auftreten einer beispielsweise maximalen, axialen Betriebslast von F_{ax,max}= 7.500kN in der Druckkammer 13 ein Druck von ca. 350 bar anliegen. Aufgrund der Schweißnähte 25 in der frontseitigen Stirnfläche 15, und da die komplette frontseitige Stirnfläche 15 plan an den zu verspannenden Bauteilen, wie beispielsweise dem Innenring 47b gemäß Fig. 5 anliegen können, kann ein Aufreißen der Schweißnähte verhindert sein.

Zur Befüllung der Druckkammer kann beispielsweise eine der in der Fig. 2 dargestellten Einfüllöffnungen 11 zur Entlüftung verwendet werden, während über die andere Einfüllöffnung 11 das Druckfluid eingefüllt wird.
Weiterhin kann über eine geeignete Vorrichtung die Druckkammern 13 vor der Befüllung mit dem Druckfluid evakuiert werden, so dass beispielsweise keine Luft in den Druckkammern 13 verbleiben kann.

### Bezugszeichenliste

- 1: Spannvorrichtung
- 1a: Spannmutter
- 3: Grundkörper
- 3a: Ring
- 5: rückwärtige Stirnseite
- 7: Stößelabschnitt
- 9: mechanische Stelleinrichtung
- 9a: Stellschraube
- 11: Einfüllöffnung
- 13: Druckkammer
- 15: frontseitige Stirnfläche
- 17: Nut
- 19: Nutgrund
- 21: erste Membran
- 23: Öffnung
- 25: Schweißnaht
- 27: zweite Membran
- 29: Druckfluid
- 31: erster Seitenwandabschnitt
- 33: Stopfen
- 35: Schweißnaht
- 37: zweiter Seitenwandabschnitt
- 41: Innengewinde
- 43: Gewinde
- 44: Lagersitz
- 45: Wälzlager
- 45a: zweireihiges Kegelrollenlager
- 47a, 47b: Innenringe
- 49: Rollen
- 51: Führungsbord

## Patentansprüche

1. Spannvorrichtung aufweisend einen Grundkörper (3), der wenigstens eine Druckkammer (13) mit jeweils wenigstens einer in Wirkungsrichtung weisenden Öffnung (23) aufweist und eine die wenigstens eine Öffnung (23) verschließende erste Membran (21), die mit dem Grundkörper (3) druckdicht verbunden ist, wobei in der Druckkammer (13) eine konstante Menge an Druckfluid (29) eingeschlossen ist, die erste Membran (21) einen ersten Seitenwandabschnitt (31) der Druckkammer (13) bildet und die Spannvorrichtung (1) eine Vorrichtung zum Bewegen eines zweiten Seitenwandabschnitts (37) der Druckkammer (13) an der Spannvorrichtung (1) aufweist, **dadurch gekennzeichnet, dass** der zweite Seitenwandabschnitt (37) als eine zweite Membran (27) ausgebildet ist.

2. Spannvorrichtung nach Anspruch 1, bei der die Vorrichtung zum Bewegen eines zweiten Seitenwandabschnitts (37) der Druckkammer (13) eine mechanische Stelleinrichtung (9) an der Spannvorrichtung (1) aufweist.

3. Spannvorrichtung nach Anspruch 2, bei der die mechanische Stelleinrichtung (9) ausgebildet ist, den zweiten Seitenwandabschnitt (37) der Druckkammer (13) zu verstellen und/oder zu verformen.

4. Spannvorrichtung nach Anspruch 2 oder 3, bei der die mechanische Stelleinrichtung (9) einen in die Druckkammer (13) eindringenden und/oder den zweiten Seitenwandabschnitt (37) bewegenden bzw. verformenden Stößelabschnitt (7) aufweist.

5. Spannvorrichtung nach einem der Ansprüche 3 oder 4, bei welcher der zweite Seitenwandabschnitt (37), die Druckkammer (13) begrenzend, gegenüberliegend der ersten Membran (21) bzw. dem ersten Seitenwandabschnitt (31) angeordnet ist.

6. Spannvorrichtung nach einem der Ansprüche 3 bis 5, bei welcher der zweite Seitenwandabschnitt (37) parallel zur ersten Membran (21) bzw. dem ersten Seitenwandabschnitt (31) verlaufend angeordnet ist.

7. Spannvorrichtung nach einem der vorstehenden Ansprüche, bei der die erste Membran (21) bzw. der erste Seitenwandabschnitt (31) und/oder der zweite Seitenwandabschnitt (37) mit dem Grundkörper (3) druckdicht verbunden, insbesondere verschweißt oder verklebt ist.

8. Spannvorrichtung nach einem der vorstehenden Ansprüche, bei welcher der Grundkörper (3) als ein im Wesentlichen ringförmiger Körper (3a) ausgebildet ist, der zur Bildung der wenigstens einen Druckkammer (13) an seiner in Wirkungsrichtung weisenden Stirnfläche (15) mit einer wenigstens teilweise um den Körper (3a) umlaufenden Nut (17) versehen ist, die von der im Wesentlichen ringscheibenförmigen und an die umlaufende Erstreckung der Nut (17) angepassten ersten Membran (21) verschlossen ist.

9. Spannvorrichtung nach einem der vorstehenden Ansprüche, bei welcher der Grundkörper (3) zur Bildung einer Spannmutter (1a) mit einem Gewinde (43), insbesondere mit einem außenumfangsseitig des Grundkörpers (3) angeordneten Außengewinde und/oder mit einem innenumfangsseitig des Grundkörpers (3) angeordneten Innengewinde (41) versehen ist.

10. Spannvorrichtung nach einem der vorstehenden Ansprüche, **dadurch gekennzeichnet, dass** die erste Membran (21) bzw. der erste Seitenwandabschnitt (31) und/oder der zweite Seitenwandabschnitt (37) als Verbundbauteil, insbesondere als metallische Komponenten aufweisendes Verbundbauteil hergestellt ist.

## Claims

1. Tensioning apparatus having a main body (3) which has at least one pressure chamber (13) with in each case at least one opening (23) which points in the direction of action, and a first diaphragm (21) which closes the at least one opening (23) and is connected in a pressure-tight manner to the main body (3), a constant quantity of pressure fluid (29) being enclosed in the pressure chamber (13), the first diaphragm (21) forming a first side wall section (31) of the pressure chamber (13), and the tensioning apparatus (1) having an apparatus for moving a second side wall section (37) of the pressure chamber (13) on the tensioning apparatus (1), **characterized in that** the second side wall section (37) is configured as a second diaphragm (27).

2. Tensioning apparatus according to Claim 1, in which the apparatus has a mechanical actuating device (9) on the tensioning apparatus (1) for moving a second side wall section (37) of the pressure chamber (13).

3. Tensioning apparatus according to Claim 2, in which the mechanical actuating device (9) is configured to adjust and/or to deform the second side wall section (37) of the pressure chamber (13).

4. Tensioning apparatus according to Claim 2 or 3, in which the mechanical actuating device (9) has a plunger section (7) which penetrates into the pressure chamber (13) and/or moves or deforms the second side wall section (37).

5. Tensioning apparatus according to either of Claims 3 and 4, in which the second side wall section (37) is arranged, so as to delimit the pressure chamber (13), such that it lies opposite the first diaphragm (21) or the first side wall section (31).

6. Tensioning apparatus according to one of Claims 3 to 5, in which the second side wall section (37) is arranged so as to run parallel to the first diaphragm (21) or the first side wall section (31).

7. Tensioning apparatus according to one of the preceding claims, in which the first diaphragm (21) or the first side wall section (31) and/or the second side wall section (37) are/is connected to the main body (3) in a pressure-tight manner, in particular welded or adhesively bonded.

8. Tensioning apparatus according to one of the preceding claims, in which the main body (3) is configured as a substantially annular body (3a) which, in order to form the at least one pressure chamber (13), is provided on its end face (15) which points in the direction of action with a groove (17) which runs at least partially around the body (3a) and is closed by the first diaphragm (21) which is substantially annular disc-shaped and is adapted to the circumferential extent of the groove (17).

9. Tensioning apparatus according to one of the preceding claims, in which, in order to form a clamping nut (1a), the main body (3) is provided with a thread (43), in particular with an external thread which is arranged on the outer circumferential side of the main body (3) and/or with an internal thread (41) which is arranged on the inner circumferential side of the main body (3).

10. Tensioning apparatus according to one of the preceding claims, **characterized in that** the first diaphragm (21) or the first side wall section (31) and/or the second side wall section (37) are/is manufactured as a composite component, in particular as a composite component which has metallic components.

## Revendications

1. Dispositif de serrage comprenant un corps de base (3) qui comprend au moins une chambre de pression (13) dotée d'au moins une ouverture (23) respective orientée dans la direction d'action et une première membrane (21) fermant l'au moins une ouverture (23), laquelle membrane est reliée au corps de base (3) de manière étanche à la pression, une quantité constante de fluide sous pression (29) étant renfermée dans la chambre de pression (13), la première membrane (21) formant une première partie de paroi latérale (31) de la chambre de pression (13) et le dispositif de serrage (1) comprenant un dispositif pour déplacer une deuxième portion de paroi latérale (37) de la chambre de pression (13) sur le dispositif de serrage (1), **caractérisé en ce que** la deuxième portion de paroi latérale (37) est réalisée sous la forme d'une deuxième membrane (27).

2. Dispositif de serrage selon la revendication 1, dans lequel le dispositif pour déplacer une deuxième portion de paroi latérale (37) de la chambre de pression (13) comprend un dispositif de réglage mécanique (9) sur le dispositif de serrage (1).

3. Dispositif de serrage selon la revendication 2, dans lequel le dispositif de réglage mécanique (9) est réalisé pour déplacer et/ou déformer la deuxième portion de paroi latérale (37) de la chambre de pression (13).

4. Dispositif de serrage selon la revendication 2 ou 3, dans lequel le dispositif de réglage mécanique (9) comprend une portion de poussoir (7) pénétrant dans la chambre de pression (13) et/ou déplaçant ou déformant la deuxième portion de paroi latérale (37).

5. Dispositif de serrage selon l'une quelconque des revendications 3 et 4, dans lequel la deuxième portion de paroi latérale (37) est disposée en regard de la première membrane (21) ou de la première portion de paroi latérale (31), en délimitant la chambre de pression (13).

6. Dispositif de serrage selon l'une quelconque des revendications 3 à 5, dans lequel la deuxième portion de paroi latérale (37) est disposée de manière à s'étendre parallèlement à la première membrane (21) ou à la première portion de paroi latérale (31).

7. Dispositif de serrage selon l'une quelconque des revendications précédentes, dans lequel la première membrane (21) ou la première portion de paroi latérale (31) et/ou la deuxième portion de paroi latérale (37) sont reliées au corps de base (3) de manière étanche à la pression, en particulier sont soudées ou collées sur celui-ci.

8. Dispositif de serrage selon l'une quelconque des revendications précédentes, dans lequel le corps de base (3) est réalisé sous forme de corps essentiellement annulaire (3a) qui, pour former l'au moins une chambre de pression (13), est pourvu sur sa surface frontale (15) orientée dans la direction d'action d'une rainure (17) au moins partiellement périphérique autour du corps (3a), laquelle rainure est fermée par la première membrane (21) essentiellement en forme de disque annulaire et adaptée à l'étendue périphérique de la rainure (17).

9. Dispositif de serrage selon l'une quelconque des revendications précédentes, dans lequel le corps de base (3) est pourvu, pour former un écrou de serrage (1a), d'un filetage (43), en particulier d'un filetage extérieur disposé du côté de la périphérie extérieure du corps de base (3) et/ou d'un filetage intérieur (41) disposé du côté de la périphérie intérieure du corps de base (3).

10. Dispositif de serrage selon l'une quelconque des revendications précédentes, **caractérisé en ce que** la première membrane (21) ou la première portion de paroi latérale (31) et/ou la deuxième portion de paroi latérale (37) sont fabriquées sous forme d'élément composite, en particulier sous forme d'élément composite comprenant des composants métalliques.
